# EUROPEAN PATENT APPLICATION

(11) **EP 4 421 100 A1**
(43) Date of publication of application: **28.08.2024**
(21) Application number: 22883546.8
(22) Date of filing: 18.10.2022
(51) Int. Cl.: C08F 8/12, C08K 5/09, C08L 29/04, C08K 3/26

(54) **PROCESS FOR PRODUCTION OF ETHYLENE-VINYL ALCOHOL COPOLYMER AND PRODUCTION METHOD FOR ETHYLENE-VINYL ALCOHOL COPOLYMER**

(30) Priority: 20.10.2021 JP 2021171432
(71) Applicant: Mitsubishi Chemical Corporation, Chiyoda-ku Tokyo 100-8251 (JP)
(72) Inventor: AOYAMA Masato, Tokyo 100-8251 (JP)
(74) Representative: Vossius & Partner Patentanwälte Rechtsanwälte mbB
(86) International application number: PCT/JP2022/038680
(87) International publication number: WO 2023/068242

(57) **Abstract**

An ethylene-vinyl alcohol copolymer containing 1 to 16.5 mol% of an ethylene structural unit and has a yellowness of 80 or less, wherein the yellowness is determined by a reflection measuring method in accordance with JIS K7373 after heating a particle of the ethylene-vinyl alcohol copolymer at 170°C for 5 hours in air.

## Description

### TECHNICAL FIELD

The present disclosure relates to an ethylene-vinyl alcohol copolymer and a production method for the ethylene-vinyl alcohol copolymer.

### BACKGROUND ART

Conventionally, there has been an attempt to melt and mold a polyvinyl alcohol resin for a food packaging material having gas barrier properties, aroma retaining properties, solvent resistance, and oil resistance, while maintaining transparency.

It is required to enhance a value of the food packaging material by decreasing coloring of the melt-molded product, while improving melt moldability by decreasing melt viscosity change over time, or the like.

For example, PTL 1 discloses that coloring reduction during melt-molding and melt viscosity stability over time of a polyvinyl alcohol resin can be achieved by regulating an amount of carbonyl groups in the resin to a predetermined level or less, and controlling concentration of at least one of a carboxylic acid, an alkali metal salt, and an alkaline earth metal salt. As an indicator thereof, PTL 1 proposes to use an absorbance at 280 nm and pH of a 4% by mass aqueous solution of the resin.

On the other hand, the polyvinyl alcohol resin has a high melting point, and is easily decomposed in a molten state. Thus, various attempts have been conducted to decrease the melting point. There are many attempts to improve the quality by, for example, copolymerizing ethylene to form an ethylene-vinyl alcohol copolymer, thereby facilitating melt-molding, and further reducing the coloring.

For example, PTL 2 proposes that an aliphatic alcohol having 4 or less carbon atoms is used as a polymerization solvent, the content of acetaldehyde and saturated acetate relative to vinyl acetate is controlled to a specific value or less, and polymerization is performed at a specific temperature, thereby reducing coloring and gelling of an ethylene-vinyl alcohol copolymer obtained after saponification, in production of an ethylene-vinyl acetate copolymer with an ethylene content of 5 to 60 mol%.

PTL 3 proposes that a compound having a conjugated double bond with a molecular weight of 1000 or less is added after completion of polymerization in producing an ethylene-vinyl acetate copolymer with an ethylene content of 5 to 60 mol%, and thereby obtaining an ethylene-vinyl alcohol copolymer containing 0.1 to 3000 ppm of the compound having a conjugated double bond with a molecular weight of 1000 or less after saponification.

Further, PTL 4 proposes a film coating agent including a watersoluble polyvinyl alcohol polymer containing 3 to 19 mol% of ethylene.

### RELATED ART DOCUMENT

### PATENT DOCUMENT

PTL 1: JP-A-2011-241234
PTL 2: JP-A-2002-194009
PTL 3: JP-A-2001-206999
PTL4: JP-A-2000-119585

### SUMMARY

### PROBLEMS TO BE SOLVED BY THE DISCLOSURE

In the PTL 1, it is estimated that coloring occurs because a conjugated double bond structure including -CO-(CH=CH)ₙ- is formed. It is not described in PTL 1 that a compound having the structure -CO-(CH=CH)ₙ-, such as sorbic acid, is added at the completion of polymerization to improve coloring in melt-molding.

PTL 1 describes removal of an unreacted vinyl acetate monomer from the reaction system after completion of polymerization, but does not describe control of that value.

Further, PTL 1 does not describe an attempt to copolymerize an ethylene.

In the PTL 2, it is described that acetaldehyde acts as a chain transfer agent in performing polymerization reaction and coloring and gelation of a molded product become apparent when content ratio of acetaldehyde in a raw material exceeds 200 ppm. PTL 2 further describes removal of unreacted vinyl acetate from a solution after completion of the polymerization, but does not describe control of an amount of vinyl acetate in the solution after completion of the polymerization.

In the PTL 3, it is considered that the compound having a conjugated double bond with a molecular weight of 1000 or less is preferably added after polymerization and before a step of removing vinyl acetate, and the compound having a conjugated double bond serves as a kind of stabilizer for preventing denaturation. However, PTL 3 dose not describe an ethylene-vinyl alcohol copolymer containing less than 150 ppm of a compound having a conjugated double bond.

The PTL 4 only describes a method for forming a barrier layer by applying an aqueous solution on a base material, and does not describe an ethylene-vinyl alcohol copolymer that can reduce coloring of a melt-molded product.

Many attempts have conventionally been made to improve melt moldability by reducing an amount of impurities before polymerization or controlling additives after the polymerization. However, an ethylene-vinyl alcohol copolymer containing less than 20 mol% of an ethylene structural unit and capable of reducing coloring of a melt-molded product has not been known.

Under such circumstances, the present disclosure provides an ethylene-vinyl alcohol copolymer containing 1 to 16.5 mol% of an ethylene structural unit and capable of reducing coloring of the melt-molded product.

### MEANS FOR SOLVING THE PROBLEMS

The present inventor made intensive investigation, and as a result, found that the above object can be achieved by regulating a content of an ethylene structural unit in an ethylene-vinyl alcohol copolymer in a specific range, and further controlling yellowness determined by a reflection measuring method in accordance with JIS K7373 after heating the copolymer at 170°C for 5 hours in air to 80 or less.

That is, the present disclosure has the following aspects.
[I] An ethylene-vinyl alcohol copolymer containing 1 to 16.5 mol% of an ethylene structural unit, and having a yellowness as determined by a following yellowness test of 80 or less.

### <Yellowness test>

The yellowness is determined by a reflection measuring method in accordance with JIS K7373 after heating an ethylene-vinyl alcohol copolymer particle at 170°C for 5 hours in air.
[II] The ethylene-vinyl alcohol copolymer as recited in [I], further containing 0.15% by mass or less of sodium acetate as measured in accordance with JIS K6726.
[III] The ethylene-vinyl alcohol copolymer as recited in [I] or [II], further containing 0.1 ppm or more and 10 ppm or less of a conjugated polyene.
[IV] The ethylene-vinyl alcohol copolymer as recited in [III], wherein the conjugated polyene is at least one selected from the group consisting of sorbic acid, sorbic acid ester, and sorbic acid salt.
[V] The ethylene-vinyl alcohol copolymer as recited in any one of [I] to [IV], further including an ethylene-vinyl alcohol copolymer having a structural unit containing a primary hydroxyl group in a side chain.
[VI] A production method for the ethylene-vinyl alcohol copolymer as recited in any one of [III] to [V], including performing copolymerization reaction of a solution of a copolymerization component containing ethylene and a vinyl ester monomer, adding 0.001 to 0.125 parts by mass of the conjugated polyene relative to 100 parts by mass of an addition amount of the vinyl ester monomer at a completion of the copolymerization reaction, and then performing saponification.
[VII] The production method for the ethylene-vinyl alcohol copolymer as recited in [VI], wherein the saponification is performed after reducing an amount of an unreacted vinyl ester monomer in the solution after the completion of the copolymerization reaction to 200 ppm or less.
[VIII] The production method for the ethylene-vinyl alcohol copolymer as recited in [VI] or [VII], further including, as the copolymerization component, a monomer having a primary hydroxyl group in a side chain and/or a monomer whose primary hydroxyl group in a side chain is protected with an ester.

### EFFECTS OF THE DISCLOSURE

When using the ethylene-vinyl alcohol copolymer of the present disclosure, coloring of a melt-molded product obtained therefrom can be reduced. The above melt-molded product can be suitably used as a food packaging material that is required to have high transparency and gas barrier properties, because coloring of the product is reduced. Thus, its commercial value can be raised.

Further, according to the production method for the ethylene-vinyl alcohol copolymer of the present disclosure, an ethylene-vinyl alcohol copolymer with reduced coloring can be efficiently obtained.

### EMBODIMENTS OF THE DISCLOSURE

Hereinafter, the present disclosure will be described in more detail based on example embodiments of the present disclosure. However, the present disclosure is not limited to these embodiments.

Note that "x and/or y (x and y are any configuration or component)" means three combinations of "only x," "only y," and "x and y" in the present disclosure.

Further, in the present disclosure, the expression "x to y" (x and y are any numbers) is intended to encompass "preferably greater than x" and "preferably less than y" unless otherwise specified, in addition to the meaning of "x or more and y or less."

The expression "x or more" (x is any number) or "y or less" (y is any number), is intended to encompass "preferably greater than x" or "preferably less than y."

### Ethylene-Vinyl Alcohol Copolymer

The ethylene-vinyl alcohol copolymer (hereinafter, referred to as "EVOH") according to one exemplary embodiment of the present disclosure contains 1 to 16.5 mol% of an ethylene structural unit, and has yellowness determined by a reflection measuring method in accordance with JIS K7373 after heating the copolymer at 170°C for 5 hours in air of 80 or less.

Hereinafter, the present EVOH will be described.

The EVOH is a thermoplastic resin typically obtained by saponifying an ethylene-vinyl ester copolymer, which is a copolymer of ethylene and a vinyl ester monomer.

Examples of the vinyl ester monomer used in the present EVOH include vinyl formate, vinyl acetate, vinyl propionate, vinyl valerate, vinyl butyrate, vinyl isobutyrate, vinyl pivalate, vinyl caprate, vinyl laurate, vinyl stearate, vinyl benzoate, vinyl versatate, and vinyl trifluoroacetate. These may be used alone, or two or more of these may be used in combination. Among these, from an economical viewpoint, vinyl acetate is preferred.

As the copolymerization component, in addition to the vinyl ester monomer, other copolymerizable monomers such as a monomer having a primary hydroxyl group in the side chain, a monomer whose primary hydroxyl group in the side chain is protected with an ester or the like, and an ethylenically unsaturated monomer. These may be used alone, or two or more of these may be used in combination.

Examples of the monomer having a primary hydroxyl group in the side chain include monohydroxyalkyl group-containing monomers such as allyl alcohol, 3-butene-1-ol, 4-pentene-1-ol, 5-hexene-1-ol, 6-heptene-1-ol, and methallyl alcohol; and dihydroxyalkyl group-containing monomers such as 2-methylene-1,3-propanediol, 3,4-diol-1-butene, 4,5-diol-1-pentene, 4,5-diol-3-methyl-1-pentene, and 5,6-diol-1-hexene, and glycerol monoallyl ether.

Examples of the monomer whose primary hydroxyl group in the side chain is protected with an ester or the like include an acetate of the monomer having a primary hydroxyl group in the side chain. Specific examples thereof include monoacetoxyalkyl group-containing monomers such as allyl acetate, 3-butenyl acetate, 4-pentenyl acetate, 5-hexenyl acetate, 6-heptenyl acetate, and methallyl acetate; and diacetoxyalkyl group-containing monomers such as 2-methylene-1,3-propanediol diacetate, 3,4-diacetoxy-1-butene, 4,5-diacetoxy-1-pentene, 4,5-diacetoxy-3-methyl-1-pentene, 5,6-diacetoxy-1-hexene, and 3-allyloxy-1,2-propanediol diacetate.

Examples of the ethylenically unsaturated monomer include olefins such as propylene, 1-butene, and isobutene; unsaturated acids such as acrylic acid, methacrylic acid, crotonic acid, phthalic acid (anhydride), maleic acid (anhydride), and itaconic acid (anhydride), or salts thereof, or mono- or dialkylesters having 1 to 18 carbon atoms thereof; acrylamide, N-alkylacrylamide with alkyl group carbon number of 1 to 18, N,N-dimethylacrylamide, 2-acrylamide propanesulfonic acid or a salt thereof; acrylamides such as acrylamidepropyl dimethyl amine or acid salts thereof or a quaternary salt thereof; methacrylamides such as methacrylamide, N-alkylmethacrylamide with alkyl group carbon number of 1 to 18, N,N-dimethylmethacrylamide, and 2-methacrylamidepropane sulfonic acid or a salt thereof; N-vinylamides such as N-vinyl pyrolidone, N-vinylformamide, and N-vinylacetamide; vinyl cyanides such as acrylonitrile and methacrylonitrile; vinyl ethers such as alkyl vinyl ether, hydroxyalkyl vinyl ether, and alkoxyalkyl vinyl ether with alkyl group carbon numbers of 1 to 18; vinyl halides such as vinyl chloride, vinylidene chloride, vinyl fluoride, vinylidene fluoride, and vinyl bromide; and vinylsilanes.

Among the other copolymerizable monomers, preferred are the monomer having a primary hydroxyl group in the side chain and the monomer whose primary hydroxyl group in the side chain is protected with an ester or the like. More preferred is the monomer whose primary hydroxyl group in the side chain is protected with an ester or the like in view of the productivity, and further preferred are 3,4-diacetoxy-1-butene, 2-methylene-1,3-propanediol diacetate, and particularly preferred is 3,4-diacetoxy-1-butene.

When the monomer having a primary hydroxyl group in the side chain or the monomer whose primary hydroxyl group in the side chain is protected with an ester or the like is used as the copolymerization component, EVOH having a structural unit containing a primary hydroxyl group in the side chain is obtained. The EVOH having a structural unit containing a primary hydroxyl group in the side chain tends to have preferable secondary moldability while maintaining gas barrier properties.

The present EVOH is obtained by using the ethylene, vinyl ester monomer, and as necessary, other copolymerizable monomer, through production steps including (I) copolymerization step, (II) polymerization reaction termination step, (III) saponification step, (IV) washing step, and (V) drying step.

Hereinafter, each production step will be described.

### (I) Copolymerization Step

Known methods such as bulk polymerization, solution polymerization, suspension polymerization, dispersion polymerization, or emulsion polymerization may be used in the copolymerization reaction of the copolymerization component. Among these, solution polymerization is preferred because the copolymerization can be easily controlled. Hereinafter, the solution polymerization, which is a preferable copolymerization reaction, will be described in detail.

When such copolymerization reaction is performed by the solution polymerization, examples of a solvent used in the solution polymerization include lower alcohols having 1 to 5 carbon atoms such as methanol, ethanol, 1-propanol, 2-propanol, and butanol; and ketones such as acetone and 2-butanone. These may be used alone, or two or more of these may be used in combination. Among these, methanol is preferably used because the polymerization reaction can be easily controlled. When a copolymer having low polymerization degree is synthesized, 2-propanol is preferably used.

An amount of use of the solvent may be appropriately selected in consideration of target polymerization degree of EVOH, and a chain transfer constant of the solvent. When the solvent is methanol or 2-propanol, S (solvent) / M (monomer) is preferably 0.01 to 10 (mass ratio), and more preferably 0.05 to 7 (mass ratio).

The copolymerization component may be added in the solution polymerization by any methods including an initial bulk addition, divided addition, and continuous addition such as the Hanna method that takes a monomer reactivity ratio into consideration.

A polymerization initiator is used for the copolymerization reaction. Examples of the polymerization initiator include azo-based initiators such as 2,2'-azobisisobutyronitrile, 2,2'-azobis(2,4-dimethyl valeronitrile), 2,2'-azobis(4-methoxy-2,4-dimethyl valeronitrile); and peroxide-based initiators such as acetyl peroxide, benzoyl peroxide, lauryl peroxide, t-butyl peroxy neodecanoate, 1,1,3,3-tetramethyl butyl peroxy neodecanoate, diisopropyl peroxy dicarbonate, and di-2-ethylhexyl peroxy dicarbonate. These may be used alone, or two or more of these may be used in combination.

An amount of use of the polymerization initiator cannot be universally defined because it depends on the species of the polymerization initiator, and is arbitrarily selected depending on the polymerization speed. For example, when using 2,2'-azobisisobutyronitrile or t-butyl peroxy neodecanoate, the amount of use thereof is typically 0.001 to 0.2 parts by mass, and preferably 0.005 to 0.1 parts by mass relative to 100 parts by mass of the vinyl ester monomer.

A polymerization temperature of the copolymerization reaction is preferably selected in the range from 40°C to the boiling point, depending on the solvent to be used or ethylene pressure.

In addition, the copolymerization reaction may be performed in the presence of a chain transfer agent within the range that the effect of the present disclosure is not inhibited. Examples of the chain transfer agent include aldehydes such as acetaldehyde, propionaldehyde, and croton aldehyde; and mercaptans such as 2-hydroxy ethanethiol. These may be used alone, or two or more of these may be used in combination. An addition amount of the chain transfer agent in the copolymerization reaction is determined depending on a chain transfer constant of the chain transfer agent and the target polymerization degree of EVOH. Typically, it is preferably 0.1 to 10 parts by mass relative to 100 parts by mass of the vinyl ester monomer.

### (II) Copolymerization Reaction Termination Step

After completion of the polymerization reaction, a conjugated polyene is added as a polymerization inhibitor for reliably terminating the polymerization.

The conjugated polyene refers to a compound having a so-called conjugated double bond, in which a carbon-carbon double bond and a carbon-carbon single bond are alternately linked, and the number of the carbon-carbon double bond is two or more.

The conjugated polyene may be a conjugated diene having a structure in which two carbon-carbon double bonds and one carbon-carbon single bond are alternately linked; a conjugated triene having a structure in which three carbon-carbon double bonds and two carbon-carbon single bonds are alternately linked; or a conjugated polyene having a structure in which four or more carbon-carbon double bonds and three or more carbon-carbon single bonds are alternately linked.

However, when the number of conjugated carbon-carbon double bonds is eight or more, the molded product tends to be colored by color of the conjugated polyene itself, and thus the number of the conjugated carbon-carbon double bond is preferably seven or less. Moreover, a plurality of the conjugated double bonds including two or more carbon-carbon double bonds may be in one molecule without being conjugated one another. For example, a compound having three conjugated trienes in the same molecule, such as tung oil, is also included in the conjugated polyene.

Specific examples of the conjugated polyene include conjugated dienes having a conjugated structure of two carbon-carbon double bonds such as isoprene, 2,3-dimethyl-1,3-butadiene, 2,3-diethyl-1,3-butadiene, 2-t-butyl-1,3-butadiene, 1,3-pentadiene, 2,3-dimethyl-1,3-pentadiene, 2,4-dimethyl-1,3-pentadiene, 3,4-dimethyl-1,3-pentadiene, 3-ethyl-1,3-pentadiene, 2-methyl-1,3-pentadiene, 3-methyl-1,3-pentadiene, 4-methyl-1,3-pentadiene, 1,3-hexadiene, 2,4-hexadiene, 2,5-dimethyl-2,4-hexadiene, 1,3-octadiene, 1,3-cyclopentadiene, 1,3-cyclohexadiene, 1-phenyl-1,3-butadiene, 1,4-diphenyl-1,3-butadiene, 1-methoxy-1,3-butadiene, 2-methoxy-1,3-butadiene, 1-ethoxy-1,3-butadiene, 2-ethoxy-1,3-butadiene, 2-nitro-1,3-butadiene, chloroprene, 1-chloro-1,3-butadiene, 1-bromo-1,3-butadiene, 2-bromo-1,3-butadiene, fulvene, tropone, ocimene, phellandrene, myrcene, farnesene, cembrene, sorbic acid, sorbic acid ester, sorbic acid salt, and abietic acid; conjugated trienes having a conjugated structure of three carbon-carbon double bonds such as 1,3,5-hexatriene, 2,4,6-octatriene-1-carboxylic acid, eleostearic acid, tung oil, and cholecalciferol; and conjugated polyenes having a conjugated structure of four or more carbon-carbon double bonds such as cyclooctatetraene, 2,4,6,8-decatetraene-1-carboxylic acid, retinol, and retinoic acid. For the conjugated polyenes having a plurality of stereoisomers such as 1,3-pentadiene, myrcene, and farnesene, any one of them may be used. Such conjugated polyenes may be used alone, or two or more of these may be used in combination.

Among these, at least one selected from the group consisting of sorbic acid, sorbic acid ester, and sorbic acid salt is preferred because the copolymerization reaction can be reliably terminated and handling is easy. Sorbic acid is particularly preferred.

An addition amount of the conjugated polyene is typically preferably 0.0001 to 0.3 parts by mass, and more preferably 0.001 to 0.125 parts by mass relative to 100 parts by mass of the vinyl ester monomer added at a start of the polymerization.

It is important to control the addition amount of the conjugated polyene at the completion of polymerization. Because the conjugated polyene has a stable structure in its radical-scavenging state, the conjugated polyene has effect to reliably terminate polymerization at the time of addition after completion of the copolymerization, and suppress undesirable subsequent polymerization reaction under the condition that an unreacted vinyl ester monomer, ethylene, or polymerization initiator is remained, even when the temperature of a reaction liquid is high, and cooling is not sufficient. When the addition amount of the conjugated polyene at the completion of polymerization is too small, the effect of terminating polymerization is insufficient, and thus is not preferable.

On the other hand, it is known that the conjugated polyene, particularly sorbic acid and an ester thereof, generate a peroxide by reaction with oxygen even in its stable radical-scavenging state, and the peroxide is decomposed by heat or light to produce a mixture with acetaldehyde and fumaraldehyde. When an addition amount of the conjugated polyene is too large, undesirable reaction as described above tends to occur in the saponification step, drying step after washing, and the like, and thus it is not preferable.

A remaining amount of the conjugated polyene in a product of EVOH is also important, which will be described below.

When the addition amount of the conjugated polyene is too small, the effect of terminating the copolymerization reaction cannot be sufficiently obtained. Moreover, as described below, there is a disadvantage that an amount of the conjugated polyene in the product of EVOH becomes small.

The next (III) saponification step is preferably performed after reducing the amount of the unreacted vinyl ester monomer remaining in the solution after the termination of the copolymerization reaction to 200 ppm or less, more preferably 100 ppm or less, and particularly preferably 80 ppm or less. When the amount of the unreacted vinyl ester monomer is larger than 200 ppm, a saponified product of the unreacted vinyl ester monomer is generated by a saponification catalyst used in the next saponification step. Then, EVOH is colored, and the melt-molded product tends to be colored.

Examples of methods for reducing concentration of the unreacted vinyl ester monomer remaining in the solution to the above numerical value or less include a method including adding the solvent used in the solution polymerization described above, and heating the solution at a temperature equal to or above the boiling point of the vinyl ester monomer to distill off the unreacted vinyl ester monomer.

### (III) Saponification Step

Thereafter, saponification of the obtained ethylene-vinyl ester copolymer is performed.

Known saponification methods can be used in the saponification step. For example, the saponification is performed by adding a saponification catalyst to a solution dissolving the ethylene-vinyl ester copolymer obtained above in alcohol or water-containing alcohol.

Examples of the alcohol include lower alcohols having 1 to 5 carbon atoms such as methanol, ethanol, and propanol. These may be used alone, or two or more of these may be used in combination.

Concentration of the ethylene-vinyl ester copolymer in alcohol or water-containing alcohol is appropriately selected depending on the viscosity, and is typically 5 to 60 % by mass.

Examples of the saponification catalyst include alkali catalysts including hydroxides or alcoholates of alkali metals such as sodium hydroxide, potassium hydroxide, sodium methylate, sodium ethylate, potassium methylate, and potassium ethylate; and acid catalysts such as sulfuric acid, hydrochloric acid, nitric acid, and methasulfonic acid. Preferred examples include hydroxides or alcoholates of sodium such as sodium hydroxide and sodium methylate.

A temperature for performing the saponification is not limited, and preferably within the range from 20 to 140°C. When a content of the ethylene structural unit in the ethylene-vinyl ester copolymer is 1 to 16.5 mol%, a particulate product is generated as the saponification proceeds, indicating that the reaction proceeds. When a gel product is precipitated at this time, the product may be crushed.

When the monomer whose primary hydroxyl group in the side chain is protected with an ester or the like is used as the copolymerization component, the ester is saponified by the saponification step, and converted to a primary hydroxyl group

In the saponification step, for enhancing a saponification degree, as secondary saponification, generated particulate product may be once washed, dispersed in alcohol or the like again, and the saponification catalyst may be added thereto to allow the reaction to proceed further.

The present EVOH may not be perfectly deprotected in the saponification step, and a little amount of ester groups may be remained.

By the saponification step, vinyl ester units in EVOH are converted to vinyl alcohol units, thereby producing a slurry of EVOH.

In the EVOH slurry, it is preferred to neutralize the contained saponification catalyst. For example, when a hydroxide or alcoholate of sodium such as sodium hydroxide or sodium methylate is used as the saponification catalyst, acetic acid is preferably used for neutralization, and sodium acetate is generated as a salt.

### (IV) Washing Step

The EVOH slurry obtained after the saponification step is subjected to solid-liquid separation by a normal method, and then an EVOH particulate product obtained as a solid content are washed, thereby obtaining the EVOH particulate product with reduced amounts of remaining conjugated polyene added in the polymerization reaction termination step and salt generated when the saponification catalyst is neutralized.

As the solvent used for the washing, preferred is a solvent in which EVOH is not highly soluble, and the conjugated polyene and sodium acetate are highly soluble. Particularly preferred is a solvent in which the conjugated polyene is highly soluble.

Among them, methanol is preferable because EVOH is hardly soluble, 13.79 g of sodium acetate can be dissolved in 100 g of a saturated methanol solution at 15°C. Moreover, 20% of sorbic acid, which has a preferred structure among conjugated polyenes, can be dissolved in 100 g of the saturated methanol solution at 30°C. Additionally, methanol can also dissolve sorbic acid and sorbic acid ester, and thus is preferable.

A bath ratio in the washing step is preferably 4 to 8 parts by mass (bath ratio of 4 to 8) relative to 1 part by mass of produced EVOH. The number of times of washing is preferably 2 to 6 times, a washing temperature is preferably 20 to 70°C, and washing time is preferably 0.5 to 3 hours.

### (V) Drying Step

The EVOH particulate product after completion of the washing step is subjected to solid-liquid separation by a normal method, and subsequently subjected to the drying step, thereby obtaining the present EVOH particulate product (hereinafter, referred to as "EVOH particle"). More specifically, hot air drying using a cylindrical dryer is preferably performed, and the temperature of EVOH particles during the drying is preferably 80 to 120°C, and particularly preferably 90 to 110°C. When the temperature is too low, production efficiency tends to decrease. On the other hand, when the temperature is too high, remaining sodium acetate or the like may cause unpreferable reaction during the drying, and coloring tends to occur during melt-molding. The drying time is preferably 2 to 10 hours, and more preferably 3 to 8 hours.

In the present EVOH particles, as for the particle size after the drying, a ratio of particles passing through a sieve with mesh size of 2.36 mm according to JIS Z8801 is preferably 80 % by mass or more, and a ratio of particles passing through a sieve with mesh size of 150 µm is preferably 20% by mass or less. When the ratio of particles passing through a sieve with mesh size of 2.36 mm is less than 80 % by mass, there is a tendency that too much time is required for drying the particles. When the ratio of particles passing through a sieve with mesh size of 150 µm is more than 20% by mass, an amount of fine powders is too much, and there is a tendency that measures for preventing suction or electrostatic countermeasure is newly required in handling during melt-molding, or the like.

The particle size of the present EVOH particles can be controlled by adjusting the content of the ethylene structural unit in EVOH, concentration of the ethylene-vinyl ester copolymer in alcohol or water-containing alcohol in the saponification step, a saponification temperature, or the like. Further, when the present EVOH is a copolymer having a structural unit containing a primary hydroxyl group in the side chain of EVOH, the particle size can also be controlled by adjusting the content of the structural unit having a primary hydroxyl group in the side chain.

The thus obtained present EVOH has yellowness as determined by the following yellowness test of 80 or less, preferably 70 or less, and particularly preferably 60 or less.

When the yellowness exceeds 80, coloring of the melt-molded product is significant.

### Yellowness Test

The yellowness is determined by a reflection measuring method in accordance with JIS K7373 after heating the ethylene-vinyl alcohol copolymer particles at 170°C for 5 hours in air.

The lower limit of the yellowness is not particularly limited, and is typically 10 or more, preferably 20 or more, and particularly preferably 30 or more. For reducing the yellowness to less than 20, strict control of the amount of conjugated polyene in the polymerization reaction termination step, the amount of remaining vinyl ester monomer in the solution in the saponification step, an amount of sodium acetate remaining in dried EVOH, or the like, are required. Thus, it is not economical. Furthermore, although the reaction mechanism is unclear, when the particles are melt-molded and used, the viscosity change over time becomes large, and thus control tends to be difficult.

The content of the ethylene structural unit in the present EVOH is 1 to 16.5 mol%, preferably 3 to 15 mol%, further preferably 5 to 11 mol%, and particularly preferably 6 to 10 mol%. When the content of the ethylene structural unit is too low, the melting point of EVOH becomes high, and thus the melt-molding becomes difficult. Meanwhile, when the content of the ethylene structural unit is too large, the gas barrier properties are deteriorated.

The content of the ethylene structural unit can be controlled by adjusting ethylene pressure during the copolymerization.

The saponification degree of the present EVOH is typically 90 mol% or more, preferably 95 mol% or more, and particularly preferably 99 mol% or more. When the saponification degree is too low, for example, the gas barrier properties, aroma retaining properties, solvent resistance, and oil resistance of the melt-molded product tend to be deteriorated.

A melt flow rate (MFR) (210°C, load 2160 g), which is a viscosity indicator in obtaining a molded product by melting the present EVOH is typically 0.1 to 100 g/ 10 minutes, preferably 1 to 50 g/ 10 minutes, and particularly preferably 3 to 35 g/ 10 minutes. When the MFR is too large, molding thickness control during the melt-molding tends to be difficult, and when the MFR is too small, high load tends to be applied to a molding machine during the melt-molding.

The MFR is an indicator of the polymerization degree of EVOH, and can be adjusted by an amount of a polymerization catalyst used in copolymerization of the copolymerization component, or an amount of the solvent.

The amount of sodium acetate contained in the present EVOH is preferably 0.001 % by mass or more and 0.15% by mass or less, particularly preferably 0.005% by mass or more and 0.12% by mass or less, and further preferably 0.01% by mass or more and 0.10% by mass or less, relative to EVOH. When the amount of sodium acetate is too large, although the reaction mechanism is unclear, a coloring causing substance having the structure -CO-(CH=CH)ₙ-, which is a cause of coloring, tends to be easily formed in producing a pellet or in obtaining a molded product by melting EVOH,. Furthermore, when the amount of sodium acetate is too small, although the reaction mechanism is also unclear, when the particles are melt-molded and used, the viscosity change over time tends to be large, and thus control tends to be difficult. Note that the amount of sodium acetate is a value measured in accordance with the dissolution and titration method of the testing method for sodium acetate, in the testing methods for polyvinyl alcohol described in JIS K6726. In the case where EVOH is not fully dissolved in water, by using a liquid prepared by mixing water and methanol in a volume ratio of 3:1 in accordance with the note of JIS K6726, the present EVOH can be dissolved, and thereby sodium acetate can be detected. In addition, a branched structure generated by chain transfer during the polymerization reaction is cleaved by saponification, and sodium carboxylate generated at the molecular chain terminal can also be detected simultaneously.

The amount of the conjugated polyene remaining in the present EVOH is preferably 0.1 ppm or more and 10 ppm or less, and particularly preferably 0.15 ppm or more and 5 ppm or less.

When the amount of the conjugated polyene is less than 0.1 ppm, in the case where a radical is generated unexpectedly in the present EVOH, the effect of consuming the radical to prevent deterioration is reduced. Further, for decreasing the content of the conjugated polyene to less than 0.01 ppm, excessive washing of EVOH is required, which tends to be economically disadvantageous. When the amount of the conjugated polyene exceeds 10 ppm, a coloring causing substance having the structure -CO-(CH=CH)ₙ- tends to increase when EVOH is melted.

The present EVOH preferably tends to have a primary hydroxyl group in the side chain for suppressing coloring after heating. When the present EVOH has a structural unit having a primary hydroxyl group in the side chain, the content of the structural unit having a primary hydroxyl group in the side chain is 2.5 mol% or more, preferably 2.5 to 10 mol%, and particularly preferably 3 to 6 mol%. When the content of the structural unit having a primary hydroxyl group in the side chain is too low, the melting point of EVOH becomes high, and thus the melt-molding tends to become difficult. When the content of the structural unit having a primary hydroxyl group in the side chain is too high, production cost tends to increase, which tends to be economically disadvantageous.

The content of the structural unit having a primary hydroxyl group in the side chain can be controlled by adjusting an addition amount of the monomer having a primary hydroxyl group in the side chain or the monomer whose hydroxyl group is protected with an ester or the like, which is used as the copolymerizable monomer.

Examples of the method for obtaining the present EVOH having the above features include:
(i) a method of reducing the amount of sodium acetate remaining in EVOH to 0.15 % by mass or less;
(ii) a method of reducing the amount of conjugated polyene remaining in EVOH to 0.1 ppm or more and 10 ppm or less;
(iii) a method of using at least one selected from the group consisting of sorbic acid, sorbic acid ester, and sorbic acid salt as the conjugated polyene;
(iv) a method of adding 0.001 to 0.125 parts by mass of the conjugated polyene relative to 100 parts by mass of an addition amount of the vinyl ester monomer in the (II) copolymerization reaction termination step; and
(v) a method of performing the (III) saponification step after reducing the amount of unreacted vinyl ester monomer to 200 ppm or less in the (II) copolymerization reaction termination step.

The present EVOH can be obtained by using the methods (i) to (v) alone or in combination.

In the present EVOH, other components may be blended to form a resin composition. The other components may be contained within the range where the effect of the present disclosure is not inhibited (for example, typically 30% by mass or less, preferably 20% by mass or less, more preferably 10% by mass or less, and particularly preferably 5% by mass or less in the resin composition). Examples of the other components include thermoplastic resin other than EVOH, plasticizer, lubricant, stabilizer, surfactant, colorant, ultraviolet absorber, antistatic agent, desiccant, crosslinking agent, metal salt, filler, and various fibers. These may be used alone, or two or more of these may be used in combination.

The present EVOH is suitably used as a gas barrier material for food packaging material or the like. The method for forming the present EVOH into a gas barrier material is not particularly limited. Examples thereof include (1) a method including coating a solution dissolving the present EVOH on a film of base material resin, and drying the solution to form a layer including EVOH to form a gas barrier material, and (2) a method of melt-molding the present EVOH to form a gas barrier material.

In the above method (1), examples of the solvent for dissolving the present EVOH include lower alcohols having 1 to 5 carbon atoms such as water, methanol, ethanol, 1-propanol, 2-propanol, 1-butanol, and 2-butanol. These may be used alone, or two or more of these may be used in combination. Among these, a mixed solvent of water and 2-propanol is preferred.

The solid content concentration of the solution dissolving the present EVOH is typically 0.5 to 30% by mass, and preferably 5 to 20% by mass.

Examples of the method for coating the solution dissolving the present EVOH include known methods such as bar coater, roll coating, die coating, gravure coating, comma coating, and screen printing. Among these, a bar coater method is preferred.

After the coating, a gas barrier material formed from the present EVOH can be obtained by, for example, drying the coating with heat treatment or the like at 60 to 105°C for 0.5 to 10 minutes.

Examples of the melt-molding method in the method (2) include extrusion molding, injection molding, inflation molding, press molding, and blow molding.

The gas barrier material having a layer formed from the present EVOH is obtained as described above. The gas barrier material may have either a single layer structure or multilayer structure. Preferably, the gas barrier material has a multilayer structure. The barrier material with a multilayer structure preferably has at least one layer including the present EVOH. The gas barrier material with a multilayer structure may have laminated layers formed from the present EVOH, or have layers laminated with another base material resin.

Examples of the base material resin include polyethylene resins such as linear low density polyethylene, low density polyethylene, ultra-low density polyethylene, middle density polyethylene, high density polyethylene, ethylene-propylene (block and random) copolymer, and ethylene-α-olefin (α-olefin having 4 to 20 carbon atoms) copolymer; polypropylene resins such as polypropylene and propylene-α-olefin (α-olefin having 4 to 20 carbon atoms) copolymer; (unmodified) polyolefin resins such as polybutene, polypentene, and polycyclic olefin resin (polymer having a cyclic olefin structure in at least one of main chain and side chain); polyolefin resins in a broad sense including modified olefin resins such as an unsaturated carboxylic acid-modified polyolefin resin obtained by graft modifying these polyolefins with an unsaturated carboxylic acid or an ester thereof; ionomer, ethylene-vinyl acetate copolymer, ethylene-acrylic acid copolymer, ethylene-acrylic acid ester copolymer, polyester resin, polyamide resin (also including copolyamide), polyvinyl chloride, polyvinylidene chloride, acrylic resin, polystyrene, vinyl ester resin, polyester elastomer, polyurethane elastomer, polystyrene elastomer, halogenated polyolefins such as chlorinated polyethylene and chlorinated polypropylene, and aromatic or aliphatic polyketones. These may be used alone, or two or more of these may be used in combination. The base material resin may be subjected to surface treatment such as corona treatment.

The thickness of the layer formed from the present EVOH is typically 1 to 200 µm, preferably 1 to 100 µm, and particularly preferably 1 to 50 µm. Note that when the gas barrier material has a multilayer structure, the thickness refers to a total thickness of layers formed from the present EVOH included in the gas barrier material.

Oxygen transmissivity of the layer formed from the present EVOH is preferably 5 cc·3µm/m²·day·atm or less, more preferably 1 cc·3µm/m²·day·atm or less, and particularly preferably 0.1 cc·3µm/m²·day·atm or less. Note that the oxygen transmissivity is measured under the environment of 23°C and 0%RH. The lower limit of oxygen transmissivity is typically 0.003 cc·3µm/m²·day·atm. The oxygen transmissivity can be determined by using an oxygen transmission rate measurement system.

### EXAMPLES

Hereinafter, the embodiment of the present disclosure will be more specifically described by way of Examples. However, the present disclosure is not limited to the following examples as long as the gist of the present disclosure is not impaired. Note that "part" and "%" in the examples are based on mass unless otherwise specified.

Methods for measuring the yellowness, amount of sodium acetate, amount of conjugated polyene, and amount of unreacted vinyl ester monomer in Examples are described in the following.

### Yellowness

EVOH particles (10 g) were spread on an aluminum dish, and heated in an oven at 170°C for 5 hours in air. The particles taken out from the oven were cooled to room temperature, and yellowness of the particles was determined by a reflection measuring method in accordance with JIS K7373 using Spectrophotometer SE6000 manufactured by Nippon Denshoku Industries Co., Ltd.

### Amount of Sodium Acetate

The amount of sodium acetate remaining in EVOH was determined by the dissolution and titration method of JIS K6726.

### Amount of Conjugated Polyene

When the conjugated polyene remaining in EVOH was sorbic acid, the amount thereof was determined as follows.

A sample was frozen and crushed, and 200 mg of the sample was accurately weighed. The sample was then moisturized with a minute amount of methanol. Water (5mL) was added thereto, and the mixture was heated to dissolve the sample. Methanol was further added, thereby obtaining 10 mL of solution. The solution was subjected to liquid chromatography to determine the amount of sorbic acid.

### Amount of Unreacted Vinyl Ester Monomer

In the case where the vinyl ester monomer is vinyl acetate, the amount of the unreacted vinyl ester monomer was measured by subjecting the solution after completion of the polymerization reaction to gas chromatography, thereby determining the amount of remaining vinyl acetate.

### GC Measurement Conditions

- GC system: Agilent Technologies 7890B (manufactured by Agilent Technologies Inc.)
- Detector: FID
- Column: Agilent Technologies CATALOG 125-7032 (30 m x 0.530 mm)
- Column temperature: 60°C

### Example 1

### Synthesis of Ethylene-vinyl Ester Copolymer

Vinyl acetate (460 parts), 36 parts of 3,4-diacetoxy-1-butene, and 132 parts of methanol were put in a temperature-controllable autoclave. The inside of the system was once substituted with nitrogen gas, and then substituted with ethylene. The temperature of the mixture was raised to 67°C while stirring. After the temperature raising, ethylene was pressure injected into the mixture such that the partial pressure thereof was 1.35 MPa. While stirring, the internal temperature of the mixture was maintained at 67°C for 4 hours, and a solution prepared by dissolving 0.129 parts of t-butyl peroxy neodecanoate in methanol (0.2%) was added thereto as an initiator over 4 hours. The mixture was continuously stirred for 3 hours at 67°C after completion of the addition, and thereby performing copolymerization reaction. Thereafter, as a polymerization reaction termination step, a solution prepared by dissolving 0.096 parts of sorbic acid (0.021 parts to 100 parts of vinyl acetate monomer added) in 100 parts of methanol was put therein, and the mixture was cooled to room temperature (23°C). In addition, for the purpose of reducing an amount of unreacted vinyl ester monomer, the mixture was heated to 75°C for removing volatile content, and methanol was repeatedly added to the mixture. Thus, a solution of ethylene-vinyl acetate-3,4-diacetoxybutene copolymer in methanol was obtained. At this time, the amount of unreacted vinyl acetate monomer remaining in the solution was 10 ppm.

### Production of EVOH and Properties of EVOH

The solution was diluted with methanol to adjust the concentration to 10%. While stirring the solution in a flask equipped with a stirrer and condenser tube, and maintaining the solution temperature at 45°C, an 8.7% sodium hydroxide solution in methanol was added to the solution in an amount such that sodium hydroxide was 10 mmol equivalent to vinyl acetate unit in the copolymer to perform first saponification. After 30 minutes, a saponified product was precipitated. Stirring was continued, and finally, the product became a slurry containing a particulate product. For further promoting the saponification, as second saponification, the produced slurry was once filtrated, and then dispersed again in methanol that is 20 times the amount of the saponified product. Then, while stirring the solution in the flask equipped with a stirrer and condenser tube, the 8.7% sodium hydroxide solution in methanol was added to the solution in an amount such that sodium hydroxide was 50 mmol equivalent to the vinyl acetate unit before the first saponification in the copolymer, and performed reaction at 50°C for 3 hours. After the reaction, the mixture was neutralized with acetic acid, the slurry was filtrated again to obtain a wet cake. The wet cake was washed three times with methanol that is five times the mass of the wet cake and filtrated, and dried at 100°C in a hot air dryer for 8 hours to obtain EVOH particles. The obtained copolymer had a 1,2-butanediol structure as the structure having a primary hydroxyl group in the side chain.

The saponification degree of the obtained EVOH particles analyzed with an amount of alkali consumption related to hydrolysis of a remaining vinyl ester unit was 99.9 mol%. The content of the ethylene structural unit determined by NMR measurement was 11.4 mol%, and the content of a 1,2-butanediol structural unit was 3.2 mol%.

The amount of remaining sodium acetate was 0.109% by mass, and the amount of conjugated polyene was 0.3 ppm.

In the obtained EVOH particles, the ratio of particles passing through a sieve with mesh size of 2.36 mm according to JIS Z8801 was 86% by mass, and the ratio of particles passing through a sieve with mesh size of 150 µm was 17% by mass.

After the EVOH particles were heated at 170°C for 5 hours in air, the yellowness determined by a reflection measuring method in accordance with JIS K7373 was 43.9.

The copolymerization component or the like of EVOH in Example 1 are shown in Table 1 below, and the evaluation results or the like of EVOH are shown in Table 2 below.

### Examples 2, 3, 9, and 10, and Comparative Examples 1, 2, 4, 5, and 6

Polymerization was performed by changing the amount of vinyl acetate, amount of 3,4-diacetoxy-1-butene, amount of methanol, ethylene partial pressure, and amount of t-butyl peroxy neodecanoate added, and the species and amount of conjugated polyene added in the polymerization reaction termination step in Example 1 as shown in Table 1 below. Then, the first saponification was performed with the amount of unreacted vinyl ester monomer before the saponification step as shown in Table 1 below. Thus, EVOH particles were obtained in the same manner as in Example 1 except that whether the second saponification was performed, an amount of alkali used in the second saponification, and a method for washing a wet cake obtained after the saponification were changed as shown in Table 1.

### Examples 4 to 8, and Comparative Example 3

The amount of vinyl acetate, amount of 3,4-diacetoxy-1-butene, amount of methanol, and ethylene partial pressure added in Example 1 were changed as shown in Table 1, the initiator was changed to a solution of 2'-azobisisobutyronitrile in methanol, and a whole amount of the initiator solution was added at the start of the polymerization, to perform copolymerization reaction at 67°C for 4 hours after the addition. Thus, EVOH particles were obtained in the same manner as in Example 1 except that the species and amount of conjugated polyene added in the polymerization reaction termination step, an amount of unreacted vinyl ester monomer before the first saponification step, whether the second saponification was performed, an amount of alkali used in the second saponification, and a method for washing a wet cake obtained after the saponification were changed as shown in Table 1.

The content of the ethylene structural unit, content of the 1,2-butanediol structure, content of a 1,3-propanediol structure, saponification degree, amount of sodium acetate, amount of conjugated polyene, the ratio of particles passing through a sieve with mesh size of 2.36 mm and 150 µm, and the yellowness of the obtained EVOH particles were as shown in Table 2 below.

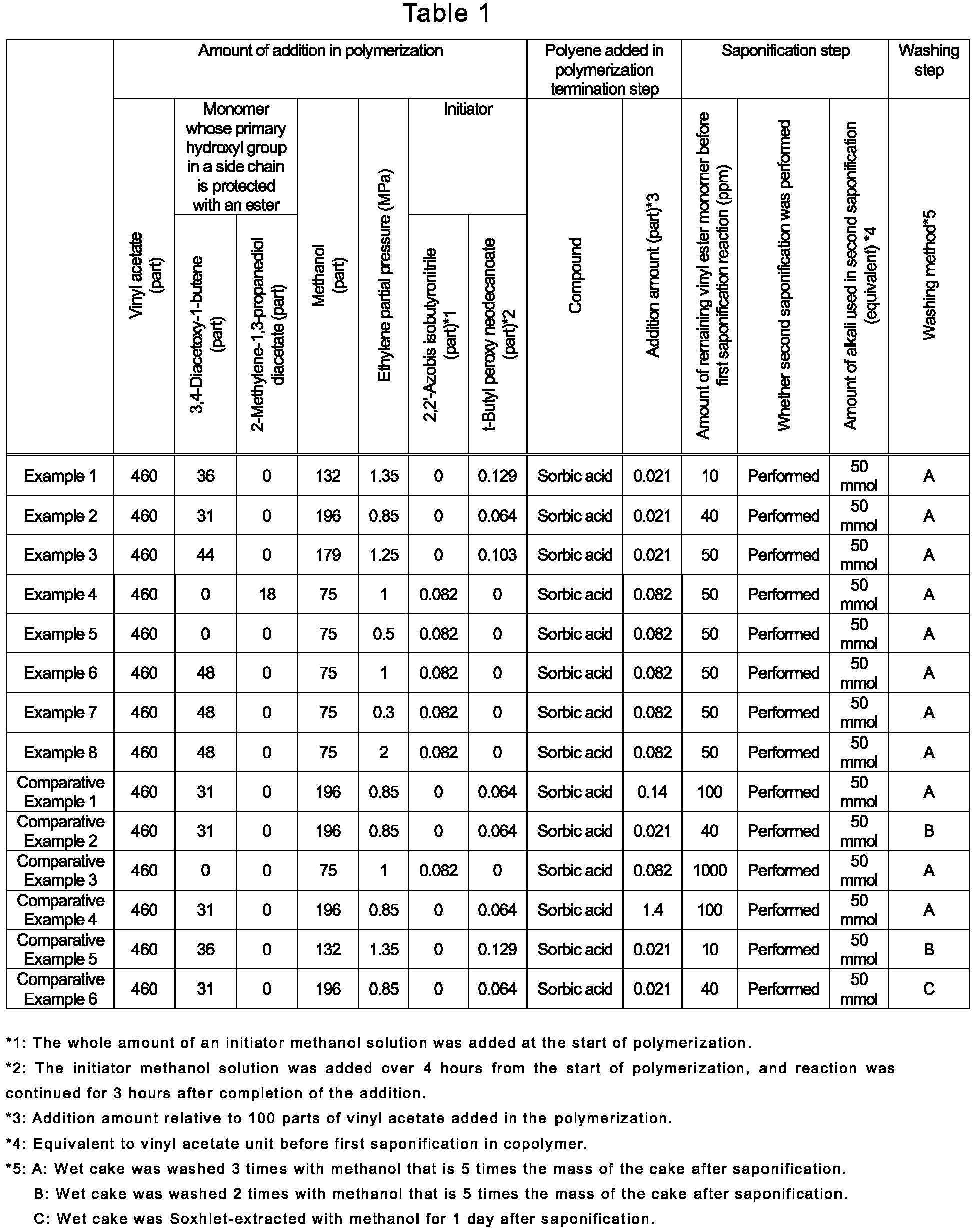

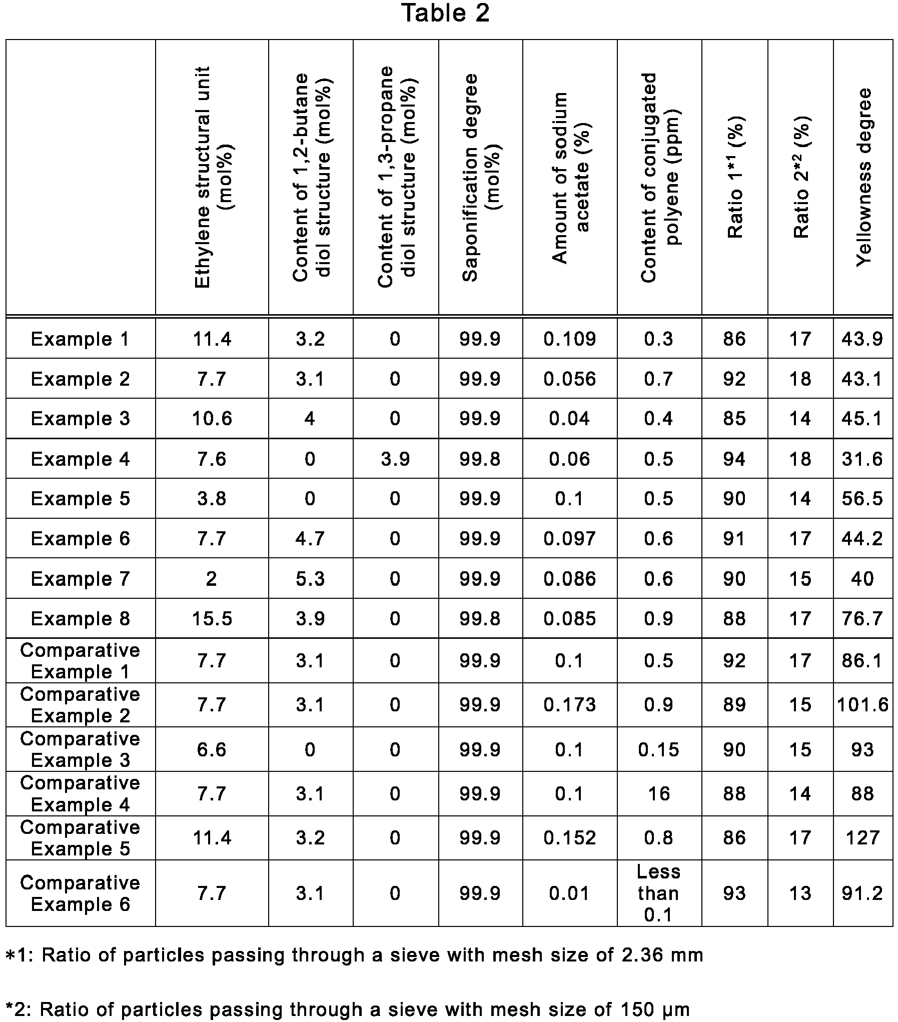

Examples 1 to 10 in Tables 1 and 2 above showed that EVOH particles obtained by: performing copolymerization with the amount of the ethylene structural unit in a specific range; adding a specific amount of conjugated polyene in the polymerization reaction termination step; performing saponification after reducing the content of unreacted vinyl ester monomer to a specific amount or less in the saponification step; and further washing to reduce the amounts of sodium acetate and conjugated polyene in the particles to a specific range, had reduced yellowness after being heated at 170°C for 5 hours in air.

Coloring is reduced in the molded product obtained by melt-molding such EVOH particles. Thus, the product is expected to be applicable to various applications that require high transparency.

The specific embodiments of the present disclosure have been demonstrated in the above Examples, but the above Examples are merely examples and should not be limitedly interpreted. Various modifications obvious to a person skilled in the art are intended to be included within the scope of the present disclosure.

### INDUSTRIAL APPLICABILITY

The present EVOH particles can reduce coloring of a melt-molded product produced by the particles, and thus can be preferably used as a food packaging material that is required to have high transparency and gas barrier properties.

## Claims

1. An ethylene-vinyl alcohol copolymer comprising 1 to 16.5 mol% of an ethylene structural unit, and having a yellowness of 80 or less, wherein the yellowness is determined by a reflection measuring method in accordance with JIS K7373 after heating a particle of the ethylene-vinyl alcohol copolymer at 170°C for 5 hours in air.

2. The ethylene-vinyl alcohol copolymer according to claim 1, further comprising 0.15% by mass or less of sodium acetate as measured in accordance with JIS K6726.

3. The ethylene-vinyl alcohol copolymer according to claim 1 or 2, further comprising 0.1 ppm or more and 10 ppm or less of a conjugated polyene.

4. The ethylene-vinyl alcohol copolymer according to claim 3, wherein the conjugated polyene is at least one selected from the group consisting of sorbic acid, a sorbic acid ester, and a sorbic acid salt.

5. The ethylene-vinyl alcohol copolymer according to any one of claims 1 to 4, further comprising an ethylene-vinyl alcohol copolymer having a structural unit containing a primary hydroxyl group in a side chain.

6. A production method for the ethylene-vinyl alcohol copolymer according to any one of claims 3 to 5, comprising performing copolymerization reaction of a solution of a copolymerization component containing ethylene and a vinyl ester monomer, adding 0.001 to 0.125 parts by mass of the conjugated polyene relative to 100 parts by mass of an addition amount of the vinyl ester monomer at a completion of the copolymerization reaction, and then performing saponification.

7. The production method for the ethylene-vinyl alcohol copolymer according to claim 6, wherein the saponification is performed after reducing an amount of an unreacted vinyl ester monomer in the solution after the completion of the copolymerization reaction to 200 ppm or less.

8. The production method for the ethylene-vinyl alcohol copolymer according to claim 6 or 7, further comprising, as the copolymerization component, a monomer having a primary hydroxyl group in a side chain and/or a monomer whose primary hydroxyl group in a side chain is protected with an ester.
